# EUROPÄISCHE PATENTSCHRIFT

(11) **EP 1 218 814 B1**
(45) Veröffentlichungstag und Bekanntmachung des Hinweises auf die Patenterteilung: **09.04.2003**
(21) Anmeldenummer: 00936630.3
(22) Anmeldetag: 19.04.2000
(51) Int. Cl.: G06F 3/023, H04M 1/274

(54) **VERFAHREN UND ANORDNUNG ZUR EINGABE ALPHANUMERISCHER ZEICHEN**
METHOD AND APPARATUS FOR INPUTTING ALPHANUMERIC CHARACTERS
PROCEDE ET DISPOSITIF POUR ENTRER DES CARACTERES ALPHANUMERIQUES

(30) Priorität: 08.09.1999 DE 19942946
(43) Veröffentlichungstag der Anmeldung: 03.07.2002
(73) Patentinhaber: SIEMENS AKTIENGESELLSCHAFT, 80333 München (DE)
(72) Erfinder: STOCKHUSEN, Dirk, D-85368 Moosburg (DE)
(86) Internationale Anmeldenummer: DE0001168
(87) Internationale Veröffentlichungsnummer: WO01018638

(56) Entgegenhaltungen:
- EP-A- 0 755 142
- US-A- 4 737 980
- PATENT ABSTRACTS OF JAPAN vol. 1998, no. 10, 31. August 1998 (1998-08-31) & JP 10 143307 A (KENWOOD CORP), 29. Mai 1998 (1998-05-29)
- PATENT ABSTRACTS OF JAPAN vol. 1996, no. 04, 30. April 1996 (1996-04-30) -& JP 07 322358 A (SONY CORP), 8. Dezember 1995 (1995-12-08)
- "ALPHANUMERICAL INPUT WITH STANDARD REMOTE CONTROL DEVICE" RESEARCH DISCLOSURE,GB,INDUSTRIAL OPPORTUNITIES LTD. HAVANT, Nr. 391, 1. November 1996 (1996-11-01), Seite 760 XP000680946 ISSN: 0374-4353

## Beschreibung

Die Erfindung betrifft ein Verfahren und eine Anordnung zur Eingabe alphanumerischer Zeichen, wobei die zur Eingabe verwendeten Tasten mehrfach, d.h. mit einer Vielzahl von Zeichen, belegt sind.

Mit der rasanten Verbreitung von Mobilfunktelefonen kommt es gerade in letzter Zeit zu einer ähnlich rasanten Entwicklung der mobilen Datenübertragung, insbesondere in Form von sogenannten Kurznachrichten, die über einen sogenannten Short-Message-Service (SMS) übertragen werden. Dabei erfolgt die Eingabe von Textinformationen in Mobilfunktelefone üblicherweise über eine zwölf Tasten enthaltende Tastatureinrichtung, wobei die einzelnen Tasten zur Eingabe der Buchstaben, Ziffern und Sonderzeichen mehrfach belegt sind. Je nach einzugebendem Zeichen ist die mit diesem Zeichen belegte Taste entsprechend einer zur Eingabe dieses Zeichens erforderlichen, dem Zeichen fest zugeordneten, Anzahl von Tastenbetätigungen zu drücken. So ist zur Eingabe des Buchstabens "A" beispielsweise die Taste mit der Beschriftung "2" einmal zu betätigen, zur Eingabe des Buchstabens "B" zweimal zu betätigen, zur Eingabe des Buchstabens "C" dreimal zu betätigen und zur Eingabe der Ziffer "2" viermal zu betätigen. Dies hat den Vorteil, dass ein geübter Benutzer Texte schnell eingeben kann. Nachteilig an einer derartigen Realisierung ist allerdings, dass zur Eingabe von Ziffernfolgen, wie beispielsweise Telefonnummern, in der Regel die maximale Anzahl von Tastenbetätigungen erforderlich sind. So ist in der Regel zur Eingabe der Zahl "222" eine zwölfmalige Betätigung der mit der Ziffer "2" beschrifteten Taste erforderlich.

Aus US 4737980 ist es bekannt, Daten einzugeben, wobei bei der Eingabe einer Ziffer als wahrscheinlichste Eingabe für ein weiteres Zeichen wieder von einer Ziffer ausgegangen wird.

Aus Patent Abstracts of Japan von JP 10143307 A ist es bekannt, die Eingabe von Zeichen durch die Auswahl eines optimalen Schaltreihenfolgen-Musters zu verbessern.

Daher liegt der Erfindung das Problem zugrunde, Verfahren und Anordnungen anzugeben, die es ermöglichen alphanumerische Zeichen durch mehrfach belegte Tasten intuitiv und mit geringem Aufwand einzugeben.

Diese Aufgabe wird erfindungsgemäß durch die Merkmale der unabhängigen Patentansprüche gelöst. Vorteilhafte und zweckmäßige Weiterbildungen ergeben sich aus den abhängigen Ansprüchen.

Die Erfindung beruht also auf dem Gedanken, bei der Eingabe von Zeichenfolgen die Zuordnung zwischen eingebbaren Zeichen und der Anzahl der zur Eingabe eines Zeichens erforderlichen Tastenbetätigungen in Abhängigkeit von bereits eingegebenen Zeichen an das Nutzerverhalten anzupassen.

Die Anpassung kann beispielsweise derart erfolgen, dass die zur Eingabe einer Zeichenfolge benötigten Tastenbetätigungen gegenüber einer festen Zuordnung von eingebbaren Zeichen zur entsprechenden Anzahl von zur Eingabe dieser Zeichen erforderlichen Tastenbetätigungen verringert wird.

Insbesondere, wenn die Anpassung an das Nutzerverhalten derart gestaltet ist, dass als automatische Reaktion auf die Eingabe einer ersten Ziffer zur Eingabe einer zweiten Ziffer nur eine einmalige Betätigung der mit der zweiten Ziffer belegten Taste erforderlich ist, ist zur Eingabe einer Ziffernfolge, beispielsweise einer Telefonnummer, eine erheblich geringere Anzahl von Gesamttastenbetätigungen erforderlich als dies bei einer festen Zuordnung von Zeichen zur Anzahl der dazu jeweils erforderlichen Tastenbetätigungen der Fall wäre.

Unter Taste versteht man im Zusammenhang mit der vorliegenden Erfindung beliebige Arten von Betätigungselementen, die auch durch eine Folientastatur oder einen Touchscreen realisiert sein können.

Vorteilhafte und zweckmäßige Weiterbildungen ergeben sich durch die abhängigen Ansprüche.

Zur Lösung der Aufgabe wird ferner eine Anordnung zur Eingabe alphanumerischer Zeichen angegeben. Diese Anordnung ist insbesondere geeignet zur Durchführung des erfindungsgemäßen Verfahrens oder einer seiner Weiterbildungen.

Die Erfindung wird im folgenden anhand bevorzugter Ausführungsbeispiele näher beschrieben, zu deren Erläuterung die nachstehend aufgelisteten Figuren dienen:
- Figur 1: schematische Darstellung einer Ausführungsvariante einer erfindungsgemäßen Anordnung;
- Figur 2: eine Skizze, die eine Bedieneinrichtung in unterschiedlichen Stadien einer Ausführungsvariante eines erfindungsgemäßen Verfahrens darstellt.

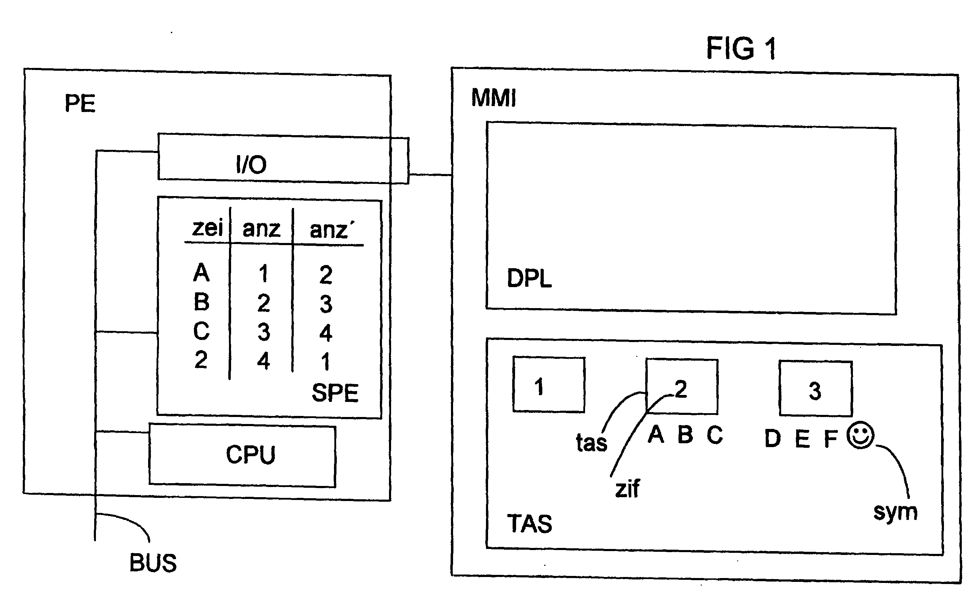

Figur 1 zeigt eine Bedieneinrichtung MMI, die aus einer Anzeigeeinrichtung, wie beispielsweise einem Graphikdisplay DPL und einer Tastatureinrichtung TAS, welche unterschiedliche Tasten tas aufweist, enthält. Die Tasten tas sind dabei zur Eingabe mehrerer Zeichen mehrfach belegt. So ist beispielsweise die Taste mit der Beschriftung "2" mit den Zeichen "2", "A", "B" und "C" belegt. So ist es möglich mit dieser Taste sowohl eine Ziffer zif, als auch Buchstaben einzugeben. Eine Ausführungsvariante der Erfindung sieht vor, dass zumindest eine Taste außerdem mit einem Symbol sym belegt ist, wie dies anhand der Taste, die die Beschriftung "3" trägt gezeigt ist.

Zur Steuerung dieser Bedieneinrichtung MMI ist eine Prozessoreinrichtung PE, wie beispielsweise ein Mikrocontroller, vorgesehen, die aus einem Prozessor CPU, einer Speichereinrichtung SPE und einer Ein-/Ausgabeschnittstelle, über welche die Verbindung zur Bedieneinrichtung MMI realisiert sein kann, besteht. Die Elemente der Prozessoreinrichtung sind über ein Bussystem BUS miteinander verbunden.

Die Prozessoreinrichtung kann dabei Bestandteil eines elektronischen Gerätes, wie beispielsweise eines Mobiltelefons, sein und auch andere für Mobiltelefone spezifische Verfahren und Anwendungen steuern.

In der Speichereinrichtung SPE, bei der es sich auch um einen flüchtigen oder nichtflüchtigen Speicherbaustein handeln kann, sind Informationen über die Zuordnung von mittels einer Taste eingebbaren Zeichen zu der entsprechenden zur Eingabe dieser Zeichen erforderlichen Anzahl anz von Tastenbetätigungen abgespeichert. Je nach Ausführungsvariante kann die Speichereinrichtung SPE oder Teile der Speichereinrichtung SPE als Teil der Prozessoreinrichtung (in Figur dargestellt) realisiert sein oder als externe Speichereinrichtung (in Figur nicht dargestellt) realisiert sein, die außerhalb der Prozessoreinrichtung PE oder sogar außerhalb des die Prozessoreinrichtung PE beinhaltenden Gerätes lokalisiert ist und durch Leitungen oder ein Bussystem mit der Prozessoreinrichtung PE verbunden ist.

In Figur 1 ist anhand der Taste tas mit der Beschriftung "2" die Zuordnung von eingebbaren Zeichen zei zur Anzahl der dazu jeweils erforderlichen Tastenbetätigungen in der Speichereinrichtung SPE skizziert. So sind beispielsweise zu Beginn einer Nachrichteneingabe oder nach der erfolgten Eingabe eines Buchstabens bzw. als Reaktion auf die Eingabe eines Buchstabens für die Eingabe des Buchstabens "A" eine Tastenbetätigung erforderlich, für die Eingabe des Buchstabens "B" zwei Tastenbetätigungen erforderlich, für die Eingabe des Buchstabens "C" drei Tastenbetätigungen erforderlich und für die Eingabe der Ziffer "2" vier Tastenbetätigungen erforderlich.

Nachdem eine Ziffer eingegeben wurde bzw. als Reaktion auf die erfolgte Eingabe einer Ziffer wird die Zuordnung von mittels der Tasten eingebbaren Zeichen zur Anzahl der zur Eingabe dieser Zeichen erforderlichen Tastenbetätigungen an das Benutzerverhalten angepaßt und somit den eingebbaren Zeichen zei veränderte Anzahlen anz zugeordnet. Demzufolge ist nun zur Eingabe einer weiteren Ziffer nur eine Tastenbetätigung der mit dieser Ziffer belegten Taste nötig. Im hier gezeigten Beispiel ist für die Eingabe einer "2" nur eine Tastenbetätigung nötig, wohingegen zur Eingabe eines Buchstabens "A" bis "C" gegenüber der ursprünglichen Anzahl anz nun jeweils eine Tastenbetätigung mehr erforderlich ist. Auch bei den übrigen Tasten erfolgt automatisch eine entsprechende Anpassung der Zuordnung von Zeichen zei zur Anzahl der zu deren Eingabe erforderlichen Tastenbetätigungen, so daß beispielsweise zur Eingabe einer "3" nach einer erfolgten Eingabe einer "2" auch nur eine Tastenbetätigung erforderlich ist.

Je nach Ausführungsvariante kann ein Leerzeichen das Ende einer Ziffernfolge und den Anfang einer Buchstabenfolge oder die Fortsetzung einer begonnenen Ziffernfolge bzw. einer begonnenen Buchstabenfolge anzeigen.

Eine Ausgestaltung der Erfindung sieht vor, daß eine Taste tas außer mit Buchstaben und einer Ziffer zif auch mit einem Symbol sym belegt ist. Die Anpassung der Zuordnung von mittels einer Taste eingebbarer Zeichen zur Anzahl der zur Eingabe dieser Zeichen erforderlichen Tastenbetätigungen erfolgt bei der Eingabe einer Symbolfolge entsprechend der oben beschriebenen Anpassung bei der Eingabe einer Ziffernfolge.

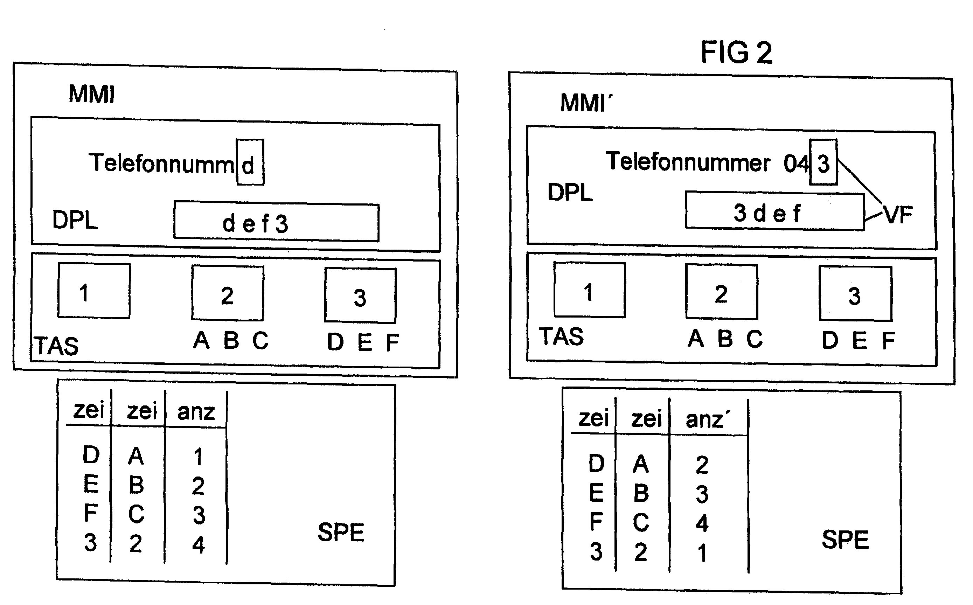

Figur 2 zeigt eine Bedieneinrichtung und darunter eine Skizze der zugehörigen Speicherbelegung in zwei unterschiedlichen Eingabemodi, einmal nach der Eingabe eines Buchstabens MMI und einmal nach der Eingabe einer Ziffer MNI'.

Die Tastatureinrichtung entspricht dabei der in Figur 1 beschriebenen Tastatureinrichtung TAS. Das Display DPL enthält im unteren Bereich ein Vorauswahlfenster VF, das die durch eine Taste eingebbaren Zeichen in einer Reihenfolge darstellt, welche die zur Eingabe der einzelnen Zeichen erforderliche Anzahl von Tastenbetätigungen widerspiegelt.

Eine andere Ausgestaltung der Erfindung sieht vor, daß in diesem Vorauswahlfenster die Darstellung der Zeichen zwar in fester Reihenfolge erfolgt, allerdings ein Marker (Cursor) automatisch das Zeichen markiert, zu dessen Eingabe nur eine Tastenbetätigung erforderlich ist.

In einer Ausführungsvariante der Erfindung steht dabei das momentan ausgewählte Zeichen, das nach Ablauf einer gewissen Zeitspanne als eingegeben gilt, an erster Stelle. Im oberen Bereich des Displays DPL sind die bisher eingegebenen Zeichen dargestellt, und in einem zweiten Vorauswahlfenster VF das aktuell einzugebende Zeichen hervorgehoben dargestellt. Dabei steht in dem oberen Vorauswahlfenster das Zeichen, das in dem unteren Vorauswahlfenster an erster Stelle steht.

Die für die mit "2" und "3" beschrifteten Tasten auszugsweise dargestellte Speicherbelegung zeigt die bekannte Zuordnung von mittels einer Taste eingebbarer Zeichen zei zur Anzahl anz der dazu jeweils benötigten Tastenbetätigungen.

Die zweite Darstellung der Bedieneinrichtung MMI' zeigt das Display DPL nach der Eingabe einer Ziffer. Es zeigt im Vorauswahlfenster VF, das nach einer einmaligen Betätigung beispielsweise der Taste mit der Beschriftung "3" erscheint, die mit dieser Taste eingebbaren Zeichen, die wieder in einer Reihenfolge angeordnet sind, welche die zur Eingabe der einzelnen Zeichen erforderliche Anzahl von Tastenbetätigungen widerspiegelt. Es ist zu erkennen, daß als Reaktion auf die Eingabe einer Ziffer "4" die Zuordnung von mittels dieser Taste eingebbaren Zeichen zur Anzahl der dazu erforderlichen Tastenbetätigungen an das Benutzerverhalten derart angepaßt wurde, daß an erster Stelle nun die Ziffer "3" steht, was zur Folge hat, daß zur Eingabe dieser Ziffer "3" nur eine Tastenbetätigung erforderlich ist.

Die für die mit "2" und "3" beschrifteten Tasten auszugsweise dargestellte Speicherbelegung zeigt die automatisch an das Nutzerverhalten angepaßte Zuordnung von mittels einer Taste eingebbaren Zeichen zei zur Anzahl anz' der dazu jeweils benötigten Tastenbetätigungen nach der Eingabe einer Ziffer.

Je nach Ausführungsvariante der Erfindung können die Zeichen zur Anpassung an das Benutzerverhalten in ihrer Reihenfolge zyklisch oder entsprechend statistischer Untersuchungen über die Wahrscheinlichkeit für das Auftreten spezifischer Zeichenfolgen verwirklicht werden.

Ein Ausführungsvariante der Erfindung sieht vor, daß der durch die Eingabe einer Ziffer bzw. eines Buchstabens erfolgte Wechsel des Eingabemodus oder der aktuelle Eingabemodus durch ein optisches Signal, wie beispielsweise ein entsprechendes Symbol auf dem Display DPL angezeigt wird.

## Patentansprüche

1. Verfahren zur Eingabe alphanumerischer Zeichen,
- bei dem zumindest eine Taste (tas) mit einer Vielzahl von Zeichen belegt ist,
- bei dem in dieser Vielzahl von Zeichen (zei) zumindest eine Ziffer (zif) und zumindest ein Buchstabe enthalten ist,
- bei dem ein bestimmtes Zeichen aus dieser Vielzahl durch eine bestimmte, diesem Zeichen zugeordnete, Anzahl von Tastenbetätigungen eingebbar ist,
- bei dem bei der Eingabe einer Zeichenfolge als Reaktion auf die Eingabe einer ersten Ziffer zur Eingabe einer zweiten Ziffer nur eine einmalige Betätigung der mit der zweiten Ziffer belegten Taste erforderlich ist,
- bei dem bei der Eingabe einer Zeichenfolge als Reaktion auf die Eingabe eines ersten Buchstabens zur Eingabe eines zweiten Buchstabens nur eine einmalige Betätigung der mit dem zweiten Buchstaben belegten Taste erforderlich ist,
- bei dem die Auswahl eines einzugebenden Zeichens mittels zumindest eines Vorauswahlfensters erfolgt, und
- bei dem in dem Vorauswahlfenster die Darstellung der durch eine Taste eingebbaren Zeichen in einer Reihenfolge erfolgt, die der aktuellen Zuordnung von Zeichen zur Anzahl der zur Eingabe dieser Zeichen erforderlichen Tastenbetätigungen entspricht, wobei das aktuell ausgewählte Zeichen hervorgehoben dargestellt ist.

2. Verfahren nach Anspruch 1, bei dem neben alphanumerischen Zeichen auch Symbole eingebbar sind, wobei als Reaktion auf die Eingabe eines ersten Symbols zur Eingabe eines zweiten Symbols nur eine einmalige Betätigung der mit dem zweiten Symbol belegten Taste erforderlich ist.

3. Anordnung zur Eingabe alphanumerischer Zeichen, mit
- zumindest einer mit einer Vielzahl von alphanumerischen Zeichen (zei) belegten Taste (tas),
- einer Speichereinrichtung (SPE) zur flexiblen Speicherung von Informationen über die Zuordnung von eingebbaren Zeichen (zei) zur Anzahl (anz) der zur Eingabe dieser Zeichen erforderlichen Tastenbetätigungen,
- einer Anzeigeeinrichtung (DPL) zur Anzeige eines Vorauswahlfensters, mittels dessen die Auswahl eines einzugebenden Zeichens erfolgt,
- einer Prozessoreinrichtung (PE), die derart eingerichtet ist,
- dass bei der Eingabe einer Zeichenfolge als Reaktion auf die Eingabe einer ersten Ziffer zur Eingabe einer zweiten Ziffer nur eine einmalige Betätigung der mit der zweiten Ziffer belegten Taste erforderlich ist,
- dass bei der Eingabe einer Zeichenfolge als Reaktion auf die Eingabe eines ersten Buchstabens zur Eingabe eines zweiten Buchstabens nur eine einmalige Betätigung der mit dem zweiten Buchstaben belegten Taste erforderlich ist,
- und dass in dem Vorauswahlfenster die Darstellung der durch eine Taste eingebbaren Zeichen in einer Reihenfolge erfolgt, die der aktuellen Zuordnung von Zeichen zur Anzahl der zur Eingabe dieser Zeichen erforderlichen Tastenbetätigungen entspricht, wobei das aktuell ausgewählte Zeichen hervorgehoben dargestellt ist.

4. Anordnung nach Anspruch 3 mit
- einer Prozessoreinrichtung (PE), die derart eingerichtet ist, dass
neben alphanumerischen Zeichen auch Symbole eingebbar sind, wobei als Reaktion auf die Eingabe eines ersten Symbols zur Eingabe eines zweiten Symbols nur eine einmalige Betätigung der mit dem zweiten Symbol belegten Taste erforderlich ist.

## Claims

1. Method for inputting alphanumeric characters,
- in which at least one key (tas) has an associated multiplicity of characters,
- in which this multiplicity of characters (zei) contains at least one digit (zif) and at least one letter,
- in which a particular character from this multiplicity can be input using a particular number of keystrokes which is associated with this character,
- in which when a string of characters is input, in response to the input of a first digit, the input of a second digit requires that the key associated with the second digit be pressed only once,
- in which, when a string of characters is input, in response to the input of a first letter, the input of a second letter requires that the key associated with the second letter be pressed only once,
- in which a character to be input is selected using at least one preselection window, and
- in which the preselection window shows the characters which can be input using a key in an order which corresponds to the current association between characters and a number of keystrokes which are required for inputting these characters, with the currently selected character being shown in highlight.

2. Method according to Claim 1, in which symbols can also be input as well as alphanumeric characters, and, in response to the input of a first symbol, the input of a second symbol reguires that the key associated with the second symbol be pressed only once.

3. Arrangement for inputting alphanumeric characters, having
- at least one key (tas) associated with a multiplicity of alphanumeric characters (zei),
- a memory device (SPE) for flexibly storing information relating to the association between inputtable characters (zei) and the number (anz) of keystrokes required for inputting these characters,
- a display device (DPL) for displaying a preselection window which is used to select a character to be input, in response to the input of a first digit, the input of a second digit requires that the key associated with the second digit be pressed only once,
- that, when a string of characters is input, in response to the input of a first letter, the input of a second letter requires that the key associated with the second letter be pressed only once,
- a processor device (PE) which is set up such
- that, when a string of character is input,
- and that the preselection window shows the characters which can be input using a key in an order which corresponds to the current association between characters and the number of keystrokes which are required for inputting these characters, with the currently selected character being shown in highlight.

4. Arrangement as claimed in Claim 3, having
- a processor device (PE) which is set up such that symbols can also be input as well as alphanumeric characters, and, in response to the input of a first symbol, the input of a second symbol requires that the key associated with the second symbol be pressed only once.

## Revendications

1. Procédé destiné à la saisie de caractères alphanumériques
- dans lequel au moins une touche (tas) est occupée par une pluralité de caractères,
- dans lequel, parmi cette pluralité de caractères (zei), se trouvent au moins un chiffre (zif) et au moins une lettre,
- dans lequel un caractère déterminé parmi cette pluralité peut être saisi grâce à un nombre déterminé de manoeuvres de la touche correspondant à ce caractère,
- dans lequel, lors de la saisie d'une séquence de caractères, comme réaction à la saisie d'un premier chiffre, pour la saisie d'un deuxième chiffre, seule une manoeuvre unique de la touche occupée par le deuxième chiffre est nécessaire,
- dans lequel, lors de la saisie d'une séquence de caractères, comme réaction à la saisie d'une première lettre, pour la saisie d'une deuxième lettre, seule une manoeuvre unique de la touche occupée par la deuxième lettre est nécessaire,
- dans lequel le choix d'un caractère à saisir se fait au moyen d'au moins une fenêtre de présélection et
- dans lequel, dans la fenêtre de présélection, sont reproduits les caractères, qui peuvent être saisis grâce à une touche, dans un ordre qui correspond à la correspondance actuelle entre les caractères et le nombre de manoeuvres de la touche nécessaires à la saisie de ces caractères, le caractère choisi actuellement étant représenté d'une façon accentuée.

2. Procédé selon la revendication 1 dans lequel
des symboles peuvent également être saisis en plus de caractères alphanumériques et, dans ce cas, en tant que réaction à la saisie d'un premier symbole, pour la saisie d'un deuxième symbole, une seule manoeuvre de la touche occupée par le deuxième symbole étant nécessaire.

3. Dispositif destiné à la saisie de caractères alphanumériques et comportant
- au moins une touche (tas) occupée par une pluralité de caractères alphanumériques (zei),
- un dispositif de mémoire (SPE) destiné à la mémorisation souple d'informations concernant la correspondance entre des caractères (zei), qui peuvent être saisis, et le nombre (anz) de manoeuvres nécessaires à la saisie de ces caractères,
- un dispositif d'affichage (DPL) destiné à l'affichage d'une fenêtre de présélection, au moyen de laquelle se fait le choix d'un caractère à saisir,
- un dispositif à processeur (PE) conçu de telle sorte
- que, lors de la saisie d'une séquence de caractères, comme réaction à la saisie d'un premier chiffre, pour la saisie d'un deuxième chiffre, une seule manoeuvre de la touche occupée par le deuxième chiffre est nécessaire,
- que, lors de la saisie d'une séquence de caractères, comme réaction à la saisie d'une première lettre, pour la saisie d'une deuxième lettre, une seule manoeuvre de la touche occupée par la deuxième lettre est nécessaire,
- et que, dans la fenêtre de présélection, les caractères, qui peuvent être saisis grâce à une touche, sont représentés dans un ordre qui correspond à la concordance actuelle entre les caractères et le nombre de manoeuvres nécessaires à la saisie de ces caractères, le caractère choisi actuellement étant représenté d'une façon accentuée.

4. Dispositif selon la revendication 3 comportant
- un dispositif à processeur (PE) conçu de telle sorte que,
en plus de caractères alphanumériques, il est possible de saisir également des symboles, et, dans ce cas, en tant que réaction à la saisie d'un premier symbole, pour la saisie d'un deuxième symbole, une seule manoeuvre de la touche occupée par le deuxième symbole étant nécessaire.
